# FASCICULE DE BREVET EUROPEEN

(11) **EP 0 762 769 B1**
(45) Date de publication et mention de la délivrance du brevet: **17.05.2000**
(21) Numéro de dépôt: 96202260.4
(22) Date de dépôt: 12.08.1996
(51) Int. Cl.: H04N 7/24

(54) **Appareil de télévision et circuit intégré capables de traiter un signal de type MPEG-2 et de convertir un signal de type MPEG-1 en un signal de type MPEG-2**
Fernsehgerät und integrierter Schaltkreis zur Verarbeitung eines MPEG-2-Signals und zur Umwandlung eines MPEG-1-Signals in ein MPEG-2-Signal
Television apparatus and integrated circuit for processing an MPEG-2 signal and converting an MPEG-1 signal into an MPEG-2 signal

(30) Priorité: 17.08.1995 FR 9509872
(43) Date de publication de la demande: 12.03.1997
(73) Titulaire: Koninklijke Philips Electronics N.V., 5621 BA Eindhoven (NL)
(72) Inventeur: Belfils, Alain, Société Civile S.P.I.D., 75008 Paris (FR); Rakhodai, Issa, Société Civile S.P.I.D., 75008 Paris (FR)
(74) Mandataire: Charpail, François

(56) Documents cités:
- EP-A- 0 651 584
- EP-A- 0 652 677
- WO-A-95/15656
- ELEKTRONIK INDUSTRIE, vol. 25, no. 8, Août 1994, pages 60-63, XP000560093 M.BOLTON: "Empfänger-IC für Digitales Fernsehen"
- ELECTRONIC DESIGN, vol. 43, no. 9, 1 Mai 1995, HASBROUCK HEIGHTS, NEW JERSEY US, pages 101-110, XP000507683 R.NASS: "Set-Top Boxes: Few standards but a rosy outlook"
- FUNKSHAU, vol. 66, no. 18, Août 1994, pages 48-52, XP000460974 A. IBENTHAL: "Der Weg zur digitalen Fernsehnorm"
- FERNSEH- UND KINO-TECHNIK, vol. 47, no. 6, Mars 1993, pages 417-418, XP000565220 G.STEINBERGER: "Datenkompression für Consumer-Applikationen: Mit MPEG auf TV-Empfang"

## Description

La présente invention concerne un appareil de télévision, muni de moyens pour recevoir un signal numérique comprimé et mis en forme selon un standard appelé MPEG-2, et pour le traiter de façon à permettre d'afficher une image à partir de ce signal numérique, avec, parmi les dits moyens, un ensemble de circuits délivrant un signal dit MPEG-2 TS, tel que défini dans la couche "transport" de la norme MPEG-2, un démultiplexeur auquel est amené le signal MPEG2-TS, pour fournir séparément plusieurs signaux représentant des canaux de télévision qui sont combinés dans le signal MPEG-2 TS, un microprocesseur, et un circuit de décodage vidéo et son MPEG-2, auquel est amené un des signaux fournis par le démultiplexeur.

Un tel appareil de télévision est connu d'un article intitulé "Empfänger-IC für Digitales Fernsehen", de M. Bolton, dans la revue "Elektronik industrie" n°8, 1994.

Un objet de l'invention est d'élargir la fourchette des possibilités de l'appareil, par les moyens les plus simples possibles.

A cet effet, l'appareil est muni de moyens pour recevoir un signal numérique mis en paquets et comprimé selon un standard appelé MPEG-1, et il comporte un élément logique, associé au microprocesseur, qui transforme la couche transport et la mise en paquets des données numériques, notamment certaines données de signalisation et de récupération d'horloge, pour présenter le signal MPEG-1 au circuit de décodage vidéo et son sous la forme d'un signal simulant un signal MPEG-2.

L'invention est donc basée sur l'idée de combiner dans un même circuit une fonction de réception de télévision numérique et une fonction de traitement d'un support optique tel qu'un disque compact interactif, par exemple du type dit CD-I ou CD-I FMV (pour "Full Motion Video").

De préférence, le microprocesseur, le démultiplexeur et l'élément logique, ainsi que, éventuellement, un désembrouilleur, sont réalisés dans un même circuit intégré.

Avantageusement, le microprocesseur placé dans le circuit intégré est muni de moyens pour réaliser des calculs de décodage d'un signal de type MPEG.

Ainsi il est possible de décoder deux images en même temps avec un seul décodeur, et d'afficher une image dans l'image à partir d'une image décodée par le microprocesseur du circuit intégré.

L'invention concerne aussi un circuit intégré pour la télévision, comportant un microprocesseur et un démultiplexeur pour séparer l'un de l'autre plusieurs canaux de télévision qui sont combinés dans un signal MPEG-2 TS défini comme "couche transport" dans la norme MPEG-2, qui est remarquable en ce qu'il comprend un élément logique, associé au microprocesseur, pour présenter un signal de type MPEG-1 sous la forme d'un signal simulant un signal MPEG-2.

Ces aspects de l'invention ainsi que d'autres aspects plus détaillés apparaîtront plus clairement grâce à la description suivante d'un mode de réalisation constituant un exemple non limitatif.

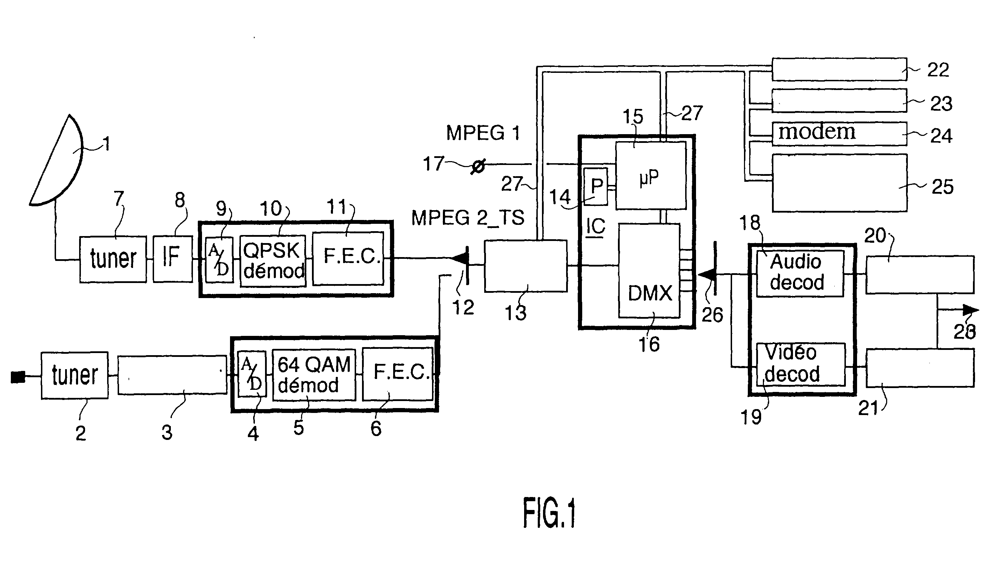

La figure 1 représente schématiquement un appareil de télévision selon l'invention.

La norme MPEG-2 définit un ensemble de caractéristiques, MPEG2-video concernant le codage d'une image, MPEG2-audio le codage du son, et MPEG2-systèmes concernant la gestion des programmes de diffusion, et notamment le multiplexage des flux audio, vidéo, données, et le support de techniques de correction d'erreurs et d'embrouillage.

Les normes MPEG-2 et MPEG-1 reposent sur les mêmes algorithmes de base, comprenant notamment :
- la division d'une image en blocs de pixels,
- une transformation dite DCT (pour "Discrete Cosine Transform"), appliquée à chaque bloc,
- un codage à longueur variable,
- la prédiction : les images sont classées en deux ou trois catégories, les images "Intra" codées indépendamment des autres, les images "Prédites", déduites d'autres images précédentes, et éventuellement les images "Bidirectionnelles", déduites d'autres images précédentes ou futures.
- l'estimation de mouvement, consistant à transmettre la description de vecteurs-mouvement qui indiquent chacun comment un bloc a été déplacé entre une première image et une deuxième image qui est déduite de la première,
- MPEG-2 audio est compatible avec MPEG-1 audio.

Toutefois MPEG-2 présente plusieurs fonctions supplémentaires :
- la possibilité de choisir entre un mode "trame" et un mode "image", le premier correspondant à une image entrelacée à deux trames par image, avec notamment la possibilité de faire l'estimation de mouvement au niveau d'une trame, et la DCT au niveau d'une trame,
- la définition de cinq niveaux de qualité différents. Un niveau dit principal, référencé MP@ML, sera probablement le plus utilisé.

L'appareil représenté par la figure unique comporte un ensemble de réception satellite 1, 7-11 et un ensemble de réception par câble 2-6.

L'ensemble de réception satellite est constitué d'une antenne parabolique 1 et d'un tuner 7, suivi d'un amplificateur à fréquence intermédiaire 8. A ce niveau le signal est modulé selon un procédé connu, dit QPSK. Le signal à fréquence intermédiaire est converti en valeurs numériques dans un convertisseur analogique-numérique 9, puis il est démodulé par le démodulateur 10 de type QPSK. Enfin, certaines erreurs dans le signal sont corrigées dans un correcteur d'erreurs 11 ("Forward Error Correction"), basé sur le fait que le signal comprend des bits de redondance selon un principe de codage connu.

L'ensemble de réception par câble est constitué, à partir d'une entrée de signal, par un tuner 2 suivi d'un transposeur 3. A ce niveau le signal est modulé selon un procédé connu, dit 64 QAM. Le signal à fréquence intermédiaire est converti en valeurs numériques dans un convertisseur analogique-numérique 4, puis il est démodulé par le démodulateur 6 de type 64 QAM. Enfin, certaines erreurs dans le signal sont corrigées dans un correcteur d'erreurs 6, de même type que le correcteur 11.

A ce niveau, le signal démodulé est appelé MPEG-2 TS (pour "MPEG-2 Transport Stream") : c'est un signal en général de l'ordre de 36 mégabits par seconde, comportant jusqu'à vingt programmes avec du son et des données, portés par un même signal, et qui, le cas échéant, est embrouillé.

Un microprocesseur 15 est associé à une mémoire 22, à un lecteur de carte 23, à un clavier de commande et/ou récepteur de télécommande, avec un écran d'affichage de données 25, et éventuellement à un modem 24.

Un ensemble de réception satellite et un ensemble de réception par câble sont ici présents ensemble, bien qu'ils soient réalisés, souvent, dans deux appareils distincts. Un commutateur 12 permet ici de choisir le signal du satellite ou celui du câble. Le signal est alors désembrouillé dans un circuit de désembrouillage 13 relié, par un bus 27, à un lecteur de carte à puce 23 et au microprocesseur 15.

Le signal désembrouillé est soumis alors à l'action d'un démultiplexeur 16, relié au microprocesseur, démultiplexeur qui sépare les uns des autres les différents programmes du signal MPEG-2 TS, l'un d'eux étant sélectionné au moyen d'un commutateur 26. Le signal issu de ce démultiplexeur est encore sous une forme numérique et requiert d'être transformé en un signal analogique pour afficher une image sur un écran et appliquer le son à un haut-parleur. Cette transformation finale est effectuée d'une part dans un décodeur vidéo 19 qui délivre un signal de type connu, par exemple dit 4-2-2, sous la forme YUV, et d'autre part dans un décodeur de son 18. Ces décodeurs sont suivis ici de circuits de traitement ("post-processing") du son 20 et de la vidéo 21, reliés par une connexion 28 à des circuits standard de son et vidéo du téléviseur, ou d'un téléviseur extérieur, dans le cas où l'appareil décrit ici est un boîtier décodeur destiné à être relié à une entrée de signal d'un téléviseur classique de type PAL, SECAM ou NTSC.

Une entrée 17 est destinée à recevoir un signal de type MPEG-1, provenant par exemple d'un lecteur de CD-I connu en soi. Un tel signal a beaucoup de points communs avec un signal MPEG-2 en ce qui concerne le codage proprement dit, mais en ce qui concerne la couche transport avec mise en paquets des données numériques, notamment les données de signalisation et de récupération d'horloge, il est passablement différent, et ne peut être présenté tel quel au décodeur vidéo 19 et au décodeur de son 18.

Ce signal MPEG-1 est présenté sous la forme d'un signal simulant un signal MPEG-2 vidéo, à l'aide d'un logiciel dont est muni le microprocesseur 15. Il est alors délivré aux décodeurs 18 et 19 comme s'il sortait du démultiplexeur 16. Pour l'essentiel, les normes MPEG-1 et MPEG-2 sont compatibles au niveau des décodeurs 18 et 19, et la transformation consiste essentiellement en un re-formatage visant à donner à chacune des données numériques le nombre de bits et la position dans un paquet qui sont attendus par les décodeurs. Néanmoins, dans MPEG-1 le son et la vidéo sont un peu imbriqués, et l'un des rôles du logiciel est de les séparer pour les présenter aux décodeurs. Un élément logique 14 câblé, intégré dans le même circuit que le processeur, est associé à ce dernier, qui lui délègue certains calculs logiques en temps réel.

Certains des circuits du récepteur sont susceptibles d'être intégrés ensemble dans un même circuit intégré, notamment : 9+10+11, 4+5+6, 14+15+16, 18+19 ; ils sont représentés, à chaque fois, dans un cadre en trait épais. Le circuit intégré qui comprend 14+15+16 pourrait éventuellement comprendre aussi le circuit de désembrouillage 13.

Le microprocesseur 15 étant suffisamment puissant, il peut en outre réaliser une partie du décodage MPEG, par exemple le calcul de vecteurs mouvement, c'est-à-dire faire du traitement d'image, à la place ou en plus du décodeur 19, ce qui permet soit de simplifier le décodeur, soit d'afficher une image dans l'image à partir des deux images décodées respectivement par le microprocesseur 15 et par le décodeur 19.

## Revendications

1. Appareil de télévision, muni de moyens pour recevoir un signal numérique comprimé et mis en forme selon un standard appelé MPEG-2, et pour le traiter de façon à permettre d'afficher une image à partir de ce signal numérique, avec, parmi les dits moyens, un ensemble de circuits (1,7-11; 2-6) délivrant un signal dit MPEG-2 TS, tel que défini dans la couche "transport" de la norme MPEG-2, un démultiplexeur (16) auquel est amené le signal MPEG2-TS, pour fournir séparément plusieurs signaux représentant des canaux de télévision qui sont combinés dans le signal MPEG-2 TS, un microprocesseur (15), et un circuit de décodage vidéo et son MPEG-2 (18,19), auquel est amené un des signaux fournis par le démultiplexeur, caractérisé en ce que l'appareil est muni de moyens pour recevoir un signal numérique mis en paquets et comprimé selon un standard appelé MPEG-1, et il comporte un élément logique (14), associé au microprocesseur, qui transforme la couche transport et la mise en paquets des données numériques, notamment certaines données de signalisation et de récupération d'horloge, pour présenter le signal MPEG-1 au circuit de décodage vidéo et son sous la forme d'un signal simulant un signal MPEG-2.

2. Appareil de télévision selon la revendication 1, caractérisé en ce que le microprocesseur, le démultiplexeur et l'élément logique sont réalisés dans un même circuit intégré.

3. Appareil de télévision selon la revendication 2, caractérisé en ce qu'un circuit de désembrouillage (13) est en outre incorporé avec le microprocesseur, le démultiplexeur et l'élément logique dans un même circuit intégré.

4. Appareil de télévision selon la revendication 2, caractérisé en ce que le microprocesseur du circuit intégré est muni de moyens pour réaliser des calculs de décodage d'un signal de type MPEG.

5. Appareil de télévision selon la revendication 4, caractérisé en ce qu'il est muni de moyens pour afficher une image dans l'image à partir d'une image décodée par le microprocesseur du circuit intégré.

6. Circuit intégré pour la télévision, comportant un microprocesseur (15) et un démultiplexeur (16) pour séparer l'un de l'autre plusieurs canaux de télévision qui sont combinés dans un signal MPEG-2 TS tel que défini dans la couche "transport" de la norme MPEG-2, caractérisé en ce qu'il comprend un élément logique (14), associé au microprocesseur, pour présenter un signal de type MPEG-1 sous la forme d'un signal simulant un signal MPEG-2.

## Patentansprüche

1. Fernsehgerät, versehen mit Mitteln zum Erhalt eines numerischen Signals, nach einer MPEG-2 benannten Norm komprimiert und formatiert, und um es so zu verarbeiten, um mit diesem numerischen Signal die Anzeige eines Bildes zu ermöglichen, mit, unter den besagten Mitteln, einem Ensemble an Schaltungen (1, 7-11; 2-6), das ein MPEG-2-TS benanntes Signal abgibt, wie in der "Transport"-Schicht der Norm MPEG-2 definiert, einem Demultiplexer (16), dem das MPEG-2-TS-Signal zugeführt wird, um gesondert mehrere Signale abzugeben, die Fernsehkanäle darstellen und in dem MPEG-2-TS-Signal verbunden werden, einem Mikroprozessor (15) und einer MPEG-2-Bild- und Ton-Dekodierschaltung (18, 19), der eines der Signale zugeführt wird, das aus dem Demultiplexer kommt, dadurch gekennzeichnet, daß das Gerät mit Mitteln versehen ist für den Empfang eines numerischen Signals, paketiert und komprimiert nach einer MPEG-1 benannten Norm, und ein logisches Element (14) enthält, verbunden mit einem Mikroprozessor, der die Transportschicht und die Paketierung der numerischen Daten wandelt, insbesondere bestimmte Signalisier- und Uhr-Rückgewinnungsdaten, um der Bild- und Ton-Dekodierschaltung das MPEG-1-Signal in der Form eines ein MPEG-2-Signal simulierenden Signals vorzuweisen.

2. Fernsehgerät nach Anspruch 1, dadurch gekennzeichnet, daß der Mikroprozessor, der Demultiplexer und das logische Element in einem einzigen integrierten Schaltkreis verwirklicht sind.

3. Fernsehgerät nach Anspruch 2, dadurch gekennzeichnet, daß zudem ein Entzerrer (13) mit dem Mikroprozessor, dem Demultiplexer und dem logischen Element in einem einzigen integrierten Schaltkreis eingebaut ist.

4. Fernsehgerät nach Anspruch 2, dadurch gekennzeichnet, daß der Mikroprozessor des integrierten Schaltkreises mit Mitteln versehen ist, um Dekodierberechnungen eines Signals vom Typ MPEG vorzunehmen.

5. Fernsehgerät nach Anspruch 4, dadurch gekennzeichnet, daß es mit Mitteln versehen ist, um ausgehend von einem vom Mikroprozessor des integrierten Schaltkreises dekodierten Bildes ein Bild im Bild anzuzeigen.

6. Integrierter Schaltkreis für das Fernsehen, mit einem Mikroprozessor (15) und einem Demultiplexer (16) zum Trennen voneinander von mehreren Fernsehkanälen, die in einem MPEG-2-TS-Signal verbunden sind, wie in der Norm MPEG-2 als "Transportschicht" definiert, dadurch gekennzeichnet, daß er ein logisches Element (14) enthält, verbunden mit dem Mikroprozessor, um ein MPEG-1-Signal in der Form eines ein MPEG-2-Signal simulierenden Signals vorzuweisen.

## Claims

1. A television apparatus provided with means for receiving a digital signal compressed and formed in accordance with a standard referred to as MPEG-2, and for processing said signal so as to display a picture based on this digital signal, said means including an assembly of circuits (1,7-11; 2-6) supplying an MPEG-2 TS signal as defined in the "transport" layer of the MPEG-2 standard, a demultiplexer (16) to which the MPEG-2-TS signal is supplied, for separating various signals representing television channels from each other which are combined in the MPEG-2 TS signal, a microprocessor (15), and an MPEG-2 audio and video decoding circuit (18, 19) to which one of the signals from the demultiplexer is supplied, characterized in that the apparatus is provided with means for receiving a digital signal put in packets and compressed in accordance with a standard referred to as MPEG-1, and comprises a logic element (14), associated with the microprocessor which transforms the transport layer and the set of packets of digital data, particularly the signalling and clock recovery data, for supplying the MPEG-1 signal in the form of a signal simulating an MPEG-2 signal to the audio and video decoding circuit.

2. A television apparatus as claimed in claim 1, characterized in that the microprocessor, the demultiplexer and the logic element are realized in the same integrated circuit.

3. A television apparatus as claimed in claim 2, characterized in that a descrambling circuit (13) is also incorporated with the microprocessor, the demultiplexer and the logic element in the same integrated circuit.

4. A television apparatus as claimed in claim 2, characterized in that the microprocessor of the integrated circuit is provided with computing means for decoding an MPEG signal.

5. A television apparatus as claimed in claim 4, characterized in that it is provided with means for displaying a picture in the picture on the basis of a picture decoded by the microprocessor of the integrated circuit.

6. An integrated circuit for television, comprising a microprocessor (15) and a demultiplexer (16) for separating various television channels from each other which are combined in an MPEG-2 TS signal as defined in the "transport" layer of the MPEG-2 standard, characterized in that it comprises a logic element (14), associated with the microprocessor, for supplying an MPEG-1 signal in the form of a signal simulating an MPEG-2 signal.
